# FASCICULE DE BREVET EUROPEEN

(11) **EP 2 414 638 B1**
(45) Date de publication et mention de la délivrance du brevet: **07.05.2014**
(21) Numéro de dépôt: 10717694.3
(22) Date de dépôt: 31.03.2010
(51) Int. Cl.: F01D 5/16, F01D 5/14, F01D 5/22

(54) **ROUE DE TURBINE A PALES DÉSACCORDÉES COMPORTANT UN DISPOSITIF D'AMORTISSEMENT.**
TURBINENRAD MIT SCHAUFELN UNTERSCHIEDLICHER EIGENFREQUENZ UND DÄMPFUNGSVORRICHTUNG
TURBINE WHEEL WITH MISTUNED BLADES AND DAMPING DEVICE

(30) Priorité: 02.04.2009 FR 0952116
(43) Date de publication de la demande: 08.02.2012
(73) Titulaire: Turbomeca, 64510 Bordes (FR)
(72) Inventeur: DIJOUD, Marc, F-64320 Ousse (FR); OUSTY, Jean-Philippe, F-64420 Soumoulou (FR)
(74) Mandataire: Milien, Jean-Baptiste Aurélien
(86) Numéro de dépôt international: PCT/FR2010/050604
(87) Numéro de publication internationale: WO 2010/112767

(56) Documents cités:
- EP-A- 0 635 623
- EP-A- 1 698 760
- US-A- 3 867 069
- US-A- 4 101 245
- US-A- 5 435 694
- US-A- 5 443 365
- US-A1- 2004 219 024
- US-A1- 2005 249 586

## Description

La présente invention concerne le domaine des roues à pales que l'on trouve notamment mais pas exclusivement dans les turbomachines, telles les turbines à gaz. Par exemple, une telle roue peut se trouver dans une turbine à haute pression ou dans une turbine libre.

La présente invention concerne plus particulièrement une roue de turbine comprenant :
- une pluralité de pales ;
- un disque, présentant un axe de rotation, à une périphérie duquel sont montées les pales, chacune des pales ayant une tête solidaire d'un pied engagé dans un logement s'ouvrant à la périphérie du disque.

Il est bien connu que lors de leur fonctionnement, notamment au sein d'un turbomoteur, les roues de turbine sont soumises à d'importantes variations de forces d'excitations vibratoires.

Dans certaines circonstances, ces excitations vibratoires peuvent entraîner des vibrations importantes et néfastes conduisant à la rupture de la roue de turbine. En effet, si les excitations vibratoires font entrer la roue de turbine en résonance, c'est-à-dire si la fréquence des excitations vibratoires correspond à la fréquence de résonance de la roue de turbine et si la déformée modale de la roue est excitable par les forces d'excitations vibratoires sur la roue, cette dernière va présenter une amplitude vibratoire très importante entrainant une fatigue mécanique du matériau de la roue et, à l'extrême, sa destruction.

Une solution technique pourrait être de renforcer la solidité mécanique de la roue de turbine pour qu'elle puisse mieux résister aux vibrations.

Cependant, une telle solution n'est pas acceptable notamment lorsque la roue de turbine est destinée à être montée dans une turbomachine.

En effet, dans la conception d'une turbomachine, les objectifs très contraignants de performance, de consommation ou de masse de la turbomachine, les objectifs d'inertie des rotors permettant des accélération suffisantes et les objectifs de respect des spécifications réglementaires ou de fiabilité induisent de multiples contraintes de conception qui réduisent parfois les marges de manoeuvre en terme d'amélioration de la solidité mécanique.

Parmi les spécifications techniques, par exemple, une contrainte de conception est que les pales doivent de casser avant le disque si la roue de turbine part en survitesse pour limiter l'énergie des débris éventuels, freiner le rotor et protéger les autres éléments de la ligne de transmission. Cette situation a lieu, par exemple, lorsqu'une pièce de la ligne de transmission de la turbomachine casse si bien qu'une roue de turbine liée à cette ligne de transmission ne présente plus de couple de rotation résistant. Dans ce cas, on comprend que la roue de turbine peut alors tourner à très grande vitesse, on dit alors qu'elle part en survitesse. Pour éviter que la roue de turbine n'éclate où ne tourne encore plus vite, ce qui endommagerait fortement la turbomachine, et supprimer le couple de rotation d'entraînement, on dimensionne les pales pour qu'elles cassent à une vitesse de rotation donnée qui est inférieure à la vitesse à laquelle casserait la roue de turbine.

On comprend donc que la conception d'une roue de turbine répond à des objectifs contradictoires et qu'un compromis doit être trouvé.

Pour répondre à un problème de résonance vibratoire, il est déjà connu d'utiliser, par exemple, des amortisseurs que l'on dispose entre les pales ou entre pales et disque. Cependant leur utilisation peut être très coûteuse car leur effet ne peut être vérifié que tardivement, dans le processus de conception, par des essais moteurs. Le problème de résonance vibratoire reste entier si ces amortisseurs ne sont pas suffisants pour déplacer la résonance hors du domaine de fonctionnement où l'excitation vibratoire est néfaste ou si ces amortisseurs ne permettent pas de réduire suffisamment les amplitudes vibratoires. Les talons des pales ou d'autres systèmes amortissants, peuvent également jouer un rôle équivalent par le biais des contacts qu'ils établissent entre pales adjacentes. Des solutions pour répondre à un problème de vibrations ont été également proposées par EP 0 635 623, US 2004/0219024 et US 2005/0249586.

Un but de la présente invention est de proposer une roue de turbine qui présente une bonne tolérance aux excitations vibratoires tout en respectant, sans difficulté supplémentaire, l'ensemble des autres contraintes de conception, y compris, par exemple, la contrainte où les pales sont dimensionnées pour casser avant le disque.

L'invention atteint son but par le fait que la roue de turbine selon l'invention comporte :
- une pluralité de premières pales et une pluralité de secondes pales, au moins l'une des premières pales étant adjacente à au moins l'une des secondes pales,
- un disque, présentant un axe de rotation, à une périphérie duquel sont montées les pales, chacune des pales ayant une tête solidaire d'un pied engagé dans un logement s'ouvrant à la périphérie du disque, chacune des pales comportant un détrompeur constitué par une tablette disposée entre la tête et le pied de ladite pale, les tablettes des premières pales présentant une longueur azimutale différente de la longueur azimutale des tablettes des secondes pales ;
en outre un dispositif d'amortissement disposé au moins entre lesdites deux pales adjacentes, ledit dispositif d'amortissement étant disposé entre les tablettes des pales et la périphérie du disque ; la masse des secondes pales de la roue de turbine étant inférieure à la masse des premières pales, la masse des pieds des secondes pales étant inférieure à la masse des pieds des premières pales tandis que les profils des têtes des premières et secondes pales sont identiques, par quoi la fréquence de résonance des premières pales est différente de la fréquence de résonance des secondes pales, et les premières et secondes pales de la roue de turbine étant réparties angulairement selon la périphérie du disque de telle façon que le centre de gravité de la roue de turbine est situé sur l'axe de rotation du disque, les secondes pales différant des premières pales en ce que les pieds des secondes pales présentent localement une épaisseur azimutale inférieure à l'épaisseur azimutale des pieds des premières pales, chacun des pieds des premières et secondes pales présentant une échasse et une attache, la tête s'étendant radialement depuis l'échasse tandis que l'attache est destinée à être montée dans le logement, l'épaisseur azimutale des échasses des secondes pales étant inférieure à l'épaisseur azimutale des échasses des premières pales, de telle sorte que les secondes pales sont dimensionnées pour casser avant les premières pales dans le cas où la roue de turbine part en survitesse.

Les inventeurs ont constaté que l'utilisation d'au moins deux types de pales ayant des fréquences de résonance distinctes, permet très avantageusement de renforcer l'efficacité du dispositif d'amortissement. Dans la mesure où les premières pales présentent une fréquence de résonance différente de celle des secondes pales, les résonances de la roue de turbine sont modifiées avec des déformées vibratoires lors des résonances qui présentent des amplitudes très différentes entre pales adjacentes. Cet effet est appelé le désaccordage.

De plus, les inventeurs ont constaté que le dispositif d'amortissement, dont la fonction est de réduire les amplitudes vibratoires des pales, introduit entre pales adjacentes est d'autant plus efficace que les déplacements relatifs entre ces pales adjacentes sont grands. Plus cette efficacité est améliorée et plus les amplitudes vibratoires seront réduites ou les résonances seront décalées vers d'autres fréquences et, par conséquent, d'autres vitesses de fonctionnement de la turbine. Ce décalage permet, dans un cas optimal, de diminuer le risque de voir la roue de turbine entrer en résonance en déplaçant les fréquences de résonance de la roue hors de la bande de fréquences d'excitation vibratoire néfaste de la roue. Il s'ensuit que grâce à l'invention, la roue de turbine peut d'une part être moins encline à entrer en résonance et d'autre part avoir des amplitudes vibratoires réduites admissibles par le matériau qui ne sera pas significativement usé ou endommagé en fatigue par les vibrations.

On pourrait également choisir des pales ayant des répartitions massiques différentes.

De préférence, le dispositif d'amortissement peut être du type à friction. Il est par exemple constitué d'une pluralité de plaquettes de métal destinée à être insérées sous les tablettes de pales adjacentes. Il peut également avoir d'autres formes et être positionné ailleurs entre les pales. L'intensité de l'amortissement pourra être réglé en jouant sur la masse des plaquettes. Le dispositif d'amortissement entre deux pales adjacentes peut également ne pas faire intervenir d'autres pièces : les talons en sommet de pales, connus par ailleurs, peuvent par exemple jouer le rôle de dispositif d'amortissement.

De préférence, la fréquence de résonance des premières pales est au moins 10% supérieure à la fréquence de résonance des secondes pales.

De manière préférentielle, la solidité des pieds des secondes pales sont inférieures à la solidité des pieds des premières pales.

Un intérêt de disposer de profils identiques est d'avoir un écoulement fluide stable mais aussi d'avoir un processus d'obtention des pièces simple et économique.

Par « azimutale » on entend la direction qui, avec les directions axiale et radiale, forme une base orthogonale, étant entendu que les directions axiale et radiale sont considérées par rapport à l'axe de rotation du disque.

Chacun des pieds des premières et secondes pales présente une tablette, une échasse et une attache, la tête s'étendant radialement depuis l'échasse tandis que l'attache est destinée à être montée dans le logement et que l'échasse s'étend de l'attache à la tablette, les échasses des secondes pales présentant une épaisseur azimutale inférieure à celle des échasses des premières pales. On comprend donc que les échasses, de préférence, ne participent pas à la fixation des pales au disque.

Les secondes pales sont préférentiellement obtenues à partir de premières pales en usinant les échasses de ces dernières de manière à réduire leur épaisseur azimutale.

Pour la fixation des pales au disque, les attaches présentent préférentiellement mais pas nécessairement la forme d'un pied de sapin.

Encore de préférence, les attaches des premières pales sont identiques aux attaches des secondes pales, de manière à faciliter l'usinage des logements du disque.

Chacune des pales comporte un détrompeur, ceci afin d'éviter un mauvais montage des pales sur le disque. On comprend en effet que si les pales ne sont pas correctement montées sur le disque, le centre de gravité de la roue de la turbine risque de ne pas être situé sur l'axe de rotation du disque ce qui entrainerait un déséquilibre de la roue si bien qu'un balourd pourrait apparaître lors de la rotation de celle-ci.

Grâce aux détrompeurs, l'opérateur qui monte les pales sur le disque évite de se tromper.

Chaque détrompeur se présente sous la forme d'une tablette disposée entre la tête et l'échasse de la pale correspondante, et les tablettes des premières pales présentent une longueur azimutale différente de celle des tablettes des secondes pales.

Cette tablette est généralement présente sur les pales de turbine. On comprend donc que selon l'invention on utilise avantageusement les tablettes en tant que détrompeur en choisissant convenablement leur forme, par exemple leur longueur azimutale.

Un autre intérêt des tablettes est qu'elles peuvent aussi participer au désaccordage dans la mesure où la masse de la tablette des premières pales est différente de celle de la tablette des secondes pales.

De préférence, mais non nécessairement, la longueur azimutale des secondes tablettes est plus grande que celle des premières tablettes.

Qui plus est, la solidité des pales peut être librement choisie de telle sorte que les premières ou les secondes pales soient amenées à rompre avant le disque.

Grâce à l'invention, la rupture intentionnelle et programmée de seulement une partie des pales, de préférence les secondes, permet de protéger le disque de l'éclatement et de freiner la roue de turbine en cas de survitesse.

Avantageusement, les premières et secondes pales sont disposées alternativement selon la périphérie du disque.

On pourra par exemple disposer alternativement une première pale puis une seconde pale puis une première pale, etc. Dans une autre variante on pourra disposer une seconde pale sur trois, sous réserve de maintenir une symétrie centrale des secondes pales. Toute autre combinaison est également possible sous réserve que le centre gravité de la roue coïncide sensiblement avec le centre du disque.

Sans sortir du cadre de la présente invention, on pourra également prévoir un nombre de types de pales supérieur à deux.

La présente invention concerne enfin une turbomachine comportant au moins une roue de turbine selon l'invention.

De préférence, mais pas nécessairement, la turbomachine est une turbine à gaz d'hélicoptère et la roue de turbine correspond à la roue de turbine haute pression et/ou bien à la roue de turbine de la turbine libre.

L'invention sera mieux comprise et ses avantages apparaîtront mieux à la lecture de la description qui suit, d'un mode de réalisation indiqué à titre d'exemple non limitatif. La description se réfère aux dessins annexés sur lesquels :
- la figure **1** montre une roue de turbine selon la présente invention qui comporte des premières et secondes pales ;
- la figure **2** est une vue de détail de la figure **1** représentant une première pale disposée entre deux secondes pales dont la largueur azimutale des échasses est plus petite que celle de l'échasse de la première pale ;
- la figure **3A** est un graphique représentant les effets de l'amortissement sur l'amplitude vibratoire de la roue de turbine, tandis que la figure **3B** représente les effets du désaccordage sur l'amplitude vibratoire de la roue de turbine en fonction de la fréquence de vibration ; et
- la figure **4** montre une turbomachine comprenant la roue de turbine selon la présente invention.

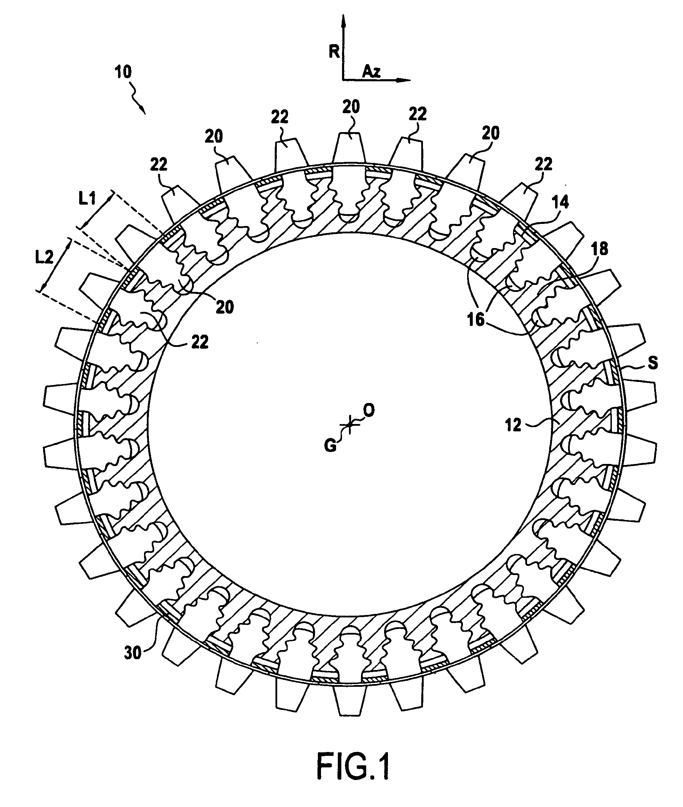

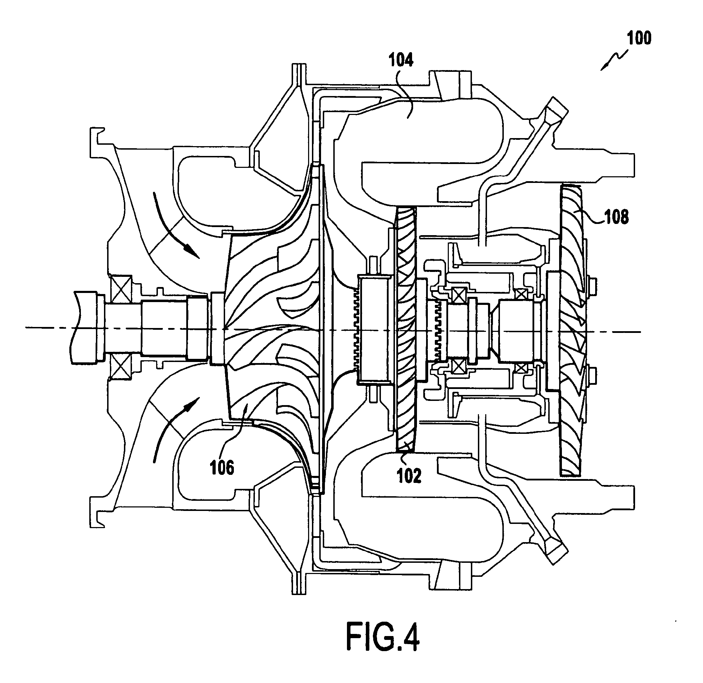

L'exemple de la figure **1** montre une roue de turbine **10** que l'on trouve habituellement dans les turbomachines telles les turbines à gaz d'hélicoptère **100**. Classiquement, une turbine à gaz, telle que celle représentée figure **4**, comporte une turbine haute pression **102** entrainée en rotation par un flux de gaz brûlés sortant de la chambre de combustion **104**. La turbine haute pression **102** entraine en rotation un compresseur **106** dont la fonction est de comprimer l'air frais entrant dans la turbine à gaz **100** et de l'amener dans la chambre de combustion **104** où il est mélangé avec du carburant en vue de la combustion.

L'excédent du flux de gaz brûlés qui sort de la turbine haute pression **102** est utilisé pour entrainer en rotation une turbine libre **108**. Cette dernière est notamment reliée au rotor principal de l'hélicoptère afin de l'entrainer en rotation.

La roue de turbine **10** selon l'invention peut avantageusement être utilisée dans la turbine haute pression **102** ou bien dans la turbine libre **108**.

En se référant à nouveau à la figure **1**, on voit que la roue de turbine **10** est constituée d'un disque **12** présentant un centre **O** et une périphérie **14**. Ce disque **12** est destiné à tourner autour de son axe de rotation passant par le centre **O.**

Dans la suite de la description, les termes « axial », « radial » et « azimutal » seront considérés par rapport à l'axe de rotation du disque. Par soucis de clarté, on a représenté sur la figure **1** les directions radiale **R** et azimutale **Az** pour une pale **20**.

On constate également qu'une pluralité de logements **16** est ménagée dans le disque **12**. Plus précisément les logements **16** s'ouvrent radialement à la périphérie **14** et s'étendent axialement entre deux faces opposées du disque **12**. Comme on le voit sur la figure **1**, deux logements consécutifs délimitent une dent **18**.

La roue de turbine **10** comporte en outre une pluralité de pales **20**,**22**, en l'espèce trente, qui sont montées dans les logements **16**.

Classiquement, les pales **20**,**22** sont introduites axialement dans les logements **16** et sont retenues axialement par un dispositif de rétention axiale non représenté ici.

Chacune des pales **20**, **22** comporte une tête **20a**, **22a** qui est solidaire d'un pied **20b**, **22b** qui est engagé dans son logement **16**.

Chacune des têtes **20a**, **22a** présente un profil aérodynamique, connu par ailleurs, qui est ici simplement schématisé.

Conformément à la présente invention, les profils des têtes **20a**, **22a** sont préférentiellement, mais pas nécessairement, identiques.

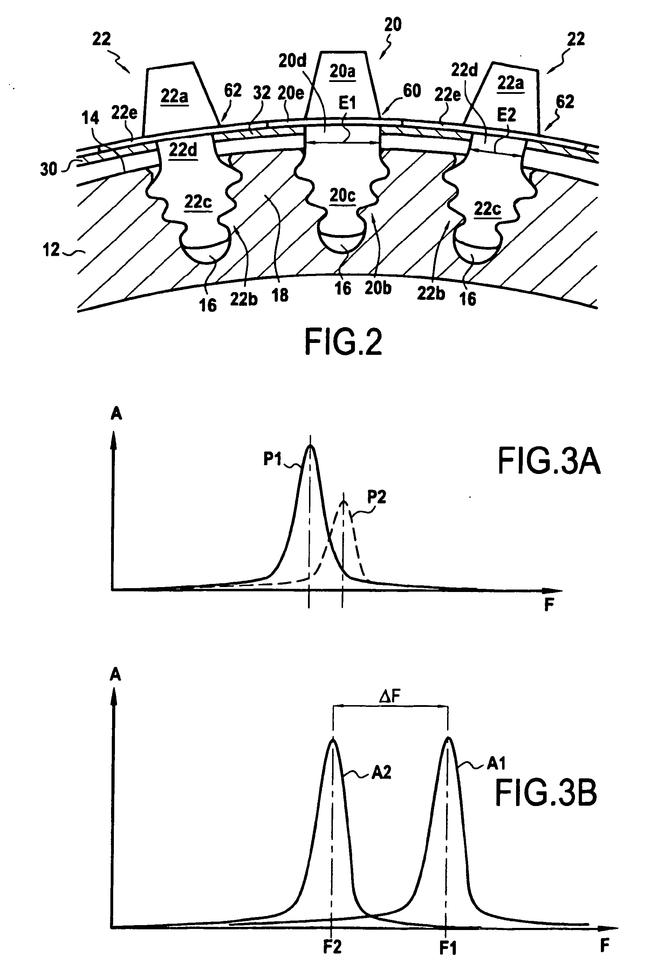

En se référant à la figure **2**, on voit que chacun des pieds **20b**, **22b** présente une attache **20c**, **22c** en forme de queue de sapin qui coopère avec les bords du logement **16** associé. Cette forme particulière, connue par ailleurs, permet la rétention radiale des pales **20**, **22** dans le disque **12**. De préférence, les attaches **20c** des premières pales 20 sont identiques aux attaches **22c** des secondes pales **22**.

Par ailleurs, chacun des pieds **20b**, **22b** présente en outre une échasse **20d**, **22d** qui correspond à la partie du pied située entre l'attache **20c**, **22c** et la tête **20a**, **22a**. Plus précisément, l'échasse **20d**, **22d** est ici la partie du pied qui ne participe pas au maintien de la pale **20**,**22** dans le logement **16**.

Dans l'exemple représenté ici, chaque pale **20**,**22** comporte en outre une tablette **20e**, **22e** disposée entre la tête **20a**, **22a** et le pied **20b**, **22b** et, plus précisément entre la tête **20a**, **22a** et l'échasse **20d**, **22d**.

La tablette **20e**, **22e** se présente sous la forme d'une plaque fine qui s'étend dans une surface courbe orthogonale à la direction radiale **R**.

Comme on le voit sur la figure **1**, la juxtaposition des tablettes **20e**, **22e** de toutes les pales forme une surface annulaire **S** concentrique au disque **12**, laquelle surface annulaire **S** constitue une virole interne pour l'écoulement du gaz.

Conformément à la présente invention, les pales **20**, **22** présentent une pluralité de premières pales **20** et une pluralité de secondes pales **22** différentes des premières pales.

En l'espèce, les premières pales **20** et les secondes pales **22** sont disposées en alternance selon la périphérie du disque **14**. Il y a donc ici quinze premières pales **20** et autant de secondes pales **22**.

Qui plus est, selon un aspect de l'invention, la masse des secondes pales **22** est inférieure à la masse des premières pales **20**. Autrement dit, les premières pales **20** présentent la même masse qui est supérieure à celle des secondes pales **22**, grâce à quoi la fréquence de résonance des premières pales est différente de la fréquence de résonance des secondes pales

Du fait de la répartition alternative des premières et secondes pales autour du disque, on comprend que le centre de gravité de l'ensemble formé par les premières pales **20**, ainsi que le centre de gravité de l'ensemble formé par les secondes pales **22** sont situés sur l'axe de rotation du disque **12**, de sorte que le centre de gravité **G** de la roue **10** soit également situé sur l'axe de rotation du disque, grâce à quoi la roue de turbine **10** ne présente pas de balourd lors de son fonctionnement.

De manière avantageuse, la masse des pieds **22b** des secondes pales **22** est inférieure à la masse des pieds **20b** des premières pales **20**, tandis que les profils des têtes **20a**, **22a** des premières et secondes pales **20**,**22** sont identiques.

Pour ce faire, comme on le voit sur la figure **2**, les secondes pales **22** diffèrent des premières pales **20** en ce que les pieds **22b** des secondes pales **22** présentent localement une épaisseur azimutale **E2** qui est inférieure à celle des pieds **20b** des premières pales **20**. Plus précisément, les échasses **22d** des secondes pales **22** qui présentent une épaisseur azimutale **E2** inférieure à l'épaisseur azimutale **E1** des échasses **20d** des premières pales **20**.

Pour obtenir les secondes pales **22**, on pourra donc partir d'une première pale **20** dont on diminuera l'épaisseur azimutale de l'échasse **20d** grâce à des outils d'usinage, telles que des molettes de rectification. Les secondes pales **22** sont donc aisément industrialisables avec les moyens de production actuels.

Conformément à l'invention, on diminue encore le risque d'entrée en résonance et ses effets en ajoutant un dispositif d'amortissement **30** entre les tablettes **20e**, **22e** et le disque **12**.

Ce dispositif d'amortissement **30** est préférentiellement du type à friction. Il se présente, par exemple, sous la forme de plaquettes métalliques **32** disposées successivement sous les tablettes tout en s'étendant entre deux pales **20**,**22** adjacentes.

Comme il l'a déjà été expliqué, l'intérêt de disposer de deux types de pales ayant des masses et solidités différentes permet d'obtenir des pales ayant des fréquences de résonances différentes et de désaccorder les pales tandis que le système d'amortissement permet de décaler la fréquence de résonance de la roue de turbine, afin d'éviter que la roue de turbine **10** n'entre en résonance lors de son fonctionnement.

Pour éviter un mauvais montage des pales **20**,**22** sur le disque **12**, ce qui aurait pour conséquence de déplacer radialement le centre de gravité de la roue **10** et donc d'induire un balourd néfaste pour la roue de turbine **10**, chacune de pales **20**,**22** comporte avantageusement un détrompeur **60**, **62**.

Les détrompeurs **60**, **62** sont arrangés de telle sorte que leur forme rend un montage erroné des pales mécaniquement impossible ou à tout le moins aisément décelable.

Dans un montage correct, les extrémités azimutales des tablettes **20e**, **22e** de deux pales adjacentes s'effleurent de telle façon qu'il n'y a pas de gap azimutal entre deux tablettes adjacentes au-delà d'un jeu de fonctionnement nécessaire.

Comme on l'a déjà mentionné ci-dessus, en l'espèce, les pales **20**, **22** sont avantageusement disposées en alternance. Autrement dit, les détrompeurs permettent d'empêcher de disposer deux premières pales **20** (ou deux secondes pales **22**) l'une à côté de l'autre.

Pour ce faire, chaque détrompeur **60**, **62** est ici constitué par la tablette **20e**, **22e** des pales **20**, **22**. Plus précisément, les tablettes **20e** des premières pales **20** présentent une longueur azimutale **L1** différente, en l'espèce plus petite, de la longueur azimutale **L2** des tablettes **22e** des secondes pales **22**.

On comprend donc qu'il n'est pas possible de disposer deux secondes pales l'une à côté de l'autre dans la mesure où la tablette de l'une des secondes pales empêche l'insertion axiale d'une autre seconde pale. De même, si l'opérateur insère deux premières pales l'une à côté de l'autre, il s'aperçoit immédiatement de son erreur car il existerait alors un gap azimutal important entre deux tablettes adjacentes.

En outre, la deuxième pale **22**, du fait de la finesse relative de son échasse par rapport à celle de la première pale **20**, est avantageusement conformée pour casser avant la première pale **20** dans l'hypothèse où la roue de turbine partirait en survitesse.

## Revendications

1. Roue de turbine (10) comprenant:
- une pluralité de premières pales (20) et une pluralité de secondes pales (22), au moins l'une des premières pales étant adjacente à au moins l'une des secondes pales,
- un disque (12), présentant un axe de rotation, à une périphérie (14) duquel sont montées les pales, chacune des pales ayant une tête (20a, 22a) solidaire d'un pied (20b, 22b) engagé dans un logement (16) s'ouvrant à la périphérie (14) du disque, chacune des pales comportant un détrompeur (60, 62) constitué par une tablette (20e, 22e) disposée entre la tête et le pied de ladite pale, les tablettes (20e) des premières pales (20) présentant une longueur azimutale (L1) différente de la longueur azimutale (L2) des tablettes (22e) des secondes pales (22) ;
- un dispositif d'amortissement (30) disposé au moins entre lesdites deux pales adjacentes, ledit dispositif d'amortissement étant disposé entre les tablettes (20e, 22e) des pales (20, 22) et la périphérie du disque (12) ;
la masse des secondes pales de la roue de turbine (10) étant inférieure à la masse des premières pales, la masse des pieds (22b) des secondes pales (22) étant inférieure à la masse des pieds (20b) des premières pales (20) tandis que les profils des têtes (20a, 22a) des premières et secondes pales sont identiques, par quoi la fréquence de résonance des premières pales est différente de la fréquence de résonance des secondes pales, et
les premières et secondes pales de la roue de turbine (10) étant réparties angulairement selon la périphérie (14) du disque de telle façon que le centre de gravité (G) de la roue de turbine (10) est situé sur l'axe de rotation du disque, les secondes pales (22) différant des premières pales (20) en ce que les pieds (22b) des secondes pales présentent localement une épaisseur azimutale (E2) inférieure à l'épaisseur azimutale (E1) des pieds (20b) des premières pales (20), chacun des pieds des premières et secondes pales présentant une échasse (20d, 22d) et une attache (20c, 22c), la tête s'étendant radialement depuis l'échasse tandis que l'attache est destinée à être montée dans le logement (16), l'épaisseur azimutale (E2) des échasses (22d) des secondes pales (22) étant inférieure à l'épaisseur azimutale (E1) des échasses des premières pales, de telle sorte que les secondes pales (22) sont dimensionnées pour casser avant les premières pales (20) dans le cas où la roue de turbine part en survitesse.

2. Roue de turbine selon la revendication **1**, **caractérisée en ce que** les attaches (20c, 22c) présentent la forme d'un pied de sapin.

3. Roue de turbine selon la revendication 1 ou 2, **caractérisée en ce que** les attaches (20c) des premières pales (20) sont identiques aux attaches (22c) des secondes pales (22).

4. Roue de turbine selon l'une quelconque des revendications **1** à **3**, **caractérisée en ce que** les premières et secondes pales (20, 22) sont disposées alternativement selon la périphérie (14) du disque (12).

5. Turbomachine (100) comportant au moins une roue de turbine (10) selon l'une quelconque des revendications **1** à **4**.

## Patentansprüche

1. Turbinenrad (10), umfassend:
- eine Vielzahl von ersten Schaufeln (20) und eine Vielzahl von zweiten Schaufeln (22), wobei wenigstens eine der ersten Schaufeln wenigstens einer der zweiten Schaufeln benachbart ist,
- eine Scheibe (12) mit einer Rotationsachse, an einem Umfang (14) derer die Schaufeln angebracht sind, wobei eine jede der Schaufeln einen Kopf (20a, 22a) aufweist, der mit einem Fuß (20b, 22b), welcher in eine sich an dem Umfang (14) der Scheibe öffnende Aufnahme (16) eingesteckt ist, fest verbunden ist, wobei eine jede der Schaufeln eine Unverwechselbarkeitsvorrichtung (60, 62) umfaßt, die durch eine zwischen dem Kopf und dem Fuß der Schaufel angeordnete Platte (20e, 22e) gebildet ist, wobei die Platten (20e) der ersten Schaufeln (20) eine azimutale Länge (L1) aufweisen, die von der azimutalen Länge (L2) der Platten (22e) der zweiten Schaufeln (22) abweicht,
- eine Dämpfungsvorrichtung (30), die wenigstens zwischen den beiden benachbarten Schaufeln angeordnet ist, wobei die Dämpfungsvorrichtung zwischen den Platten (20e, 22e) der Schaufeln (20, 22) und dem Umfang der Scheibe (12) angeordnet ist,
wobei die Masse der zweiten Schaufeln des Turbinenrades (10) geringer als die Masse der ersten Schaufeln ist, wobei die Masse der Füße (22b) der zweiten Schaufeln (22) geringer als die Masse der Füße (20b) der ersten Schaufeln (20) ist, während die Profile der Köpfe (20a, 22a) der ersten und zweiten Schaufeln identisch sind, wodurch die Resonanzfrequenz der ersten Schaufeln von der Resonanzfrequenz der zweiten Schaufeln abweicht, und
die ersten und zweiten Schaufeln des Turbinenrades (10) entlang dem Umfang (14) der Scheibe derart winkelmäßig verteilt sind, daß der Schwerpunkt (G) des Turbinenrades (10) auf der Rotationsachse der Scheibe liegt, wobei die zweiten Schaufeln (22) sich dadurch von den ersten Schaufeln (20) unterscheiden, daß die Füße (22b) der zweiten Schaufeln lokal eine azimutale Dicke (E2) aufweisen, die geringer als die azimutale Dicke (E1) der Füße (20b) der ersten Schaufeln (20) ist, wobei ein jeder der Füße der ersten und zweiten Schaufeln eine Stelze (20d, 22d) und ein Verbindungsstück (20c, 22c) aufweist, wobei der Kopf sich von der Stelze aus radial erstreckt, während das Verbindungsstück dazu bestimmt ist, in der Aufnahme (16) angebracht zu werden, wobei die azimutale Dicke (E2) der Stelzen (22d) der zweiten Schaufeln (22) geringer als die azimutale Dicke (E1) der Stelzen der ersten Schaufeln ist, derart, daß die zweiten Schaufeln (22) dimensioniert sind, um in dem Fall, in dem das Turbinenrad in Überdrehzahl gelangt, vor den ersten Schaufeln (20) zu brechen.

2. Turbinenrad nach Anspruch 1, **dadurch gekennzeichnet, daß** die Verbindungsstücke (20c, 22c) die Form eines Tannenbaumfußes aufweisen.

3. Turbinenrad nach Anspruch 1 oder 2, **dadurch gekennzeichnet, daß** die Verbindungsstücke (20c) der ersten Schaufeln (20) mit den Verbindungsstücken (22c) der zweiten Schaufeln (22) identisch sind.

4. Turbinenrad nach einem der Ansprüche 1 bis 3, **dadurch gekennzeichnet, daß** die ersten und zweiten Schaufeln (20, 22) entlang dem Umfang (14) der Scheibe (12) abwechselnd angeordnet sind.

5. Turbomaschine (100), die wenigstens ein Turbinenrad (10) nach einem der Ansprüche 1 bis 4 umfaßt.

## Claims

1. A turbine wheel (10) comprising:
· a plurality of first blades (20) and a plurality of second blades (22), at least one of the first blades being adjacent to at least one of the second blades;
· a disk (12) presenting an axis of rotation and a periphery (14) having the blades mounted thereat, each of the blades having a head (20a, 22a) solid with a root (20b, 22b) engaged in a housing (16) that opens to the periphery (14) of the disk, each of the blades including keying means (60, 62) constituted by a respective shelf (20e, 22e) arranged between the head and the root of said blade, the shelves (20e) of the first blades (20) presenting an azimuth length (L1) different from the azimuth length (L2) of the shelves (22e) of the second blades (22); and
· a damper device (30) arranged at least between said two adjacent blades, said damper device being arranged between the shelves (20e, 22e) of the blades (20, 22) and the periphery of the disk (12);
The mass of the second blades of the turbine wheel being less than the mass of the first blades, the mass of the roots (22b) of the second blades (22) being less than the mass of the roots (20b) of the first blades (20), while the profiles of the heads (20a, 22a) of the first and second blades are identical, whereby the resonant frequency of the first blades is different from the resonant frequency of the second blades; and
the first and second blades of the turbine wheel being distributed angularly around the periphery (14) of the disk in such a manner that the center of gravity (G) of the turbine wheel (10) is situated on the axis of rotation of the disk, the second blades (22) differing from the first blades (20) in that the roots (22b) of the second blades locally present an azimuth width (E2) that is less than the azimuth width (E1) of the roots (20b) of the first blades (20), each of the roots of the first and second blades presenting a tang (20d, 22d) and an attachment member (20c, 22c), the head extending radially from the tang while the attachment member is designed to be mounted in the housing (16), the azimuth width (E2) of the tangs (22d) of the second blades (22) being less than the azimuth width (E1) of the tangs of the first blades, such that the second blades (22) are dimensioned to break before the first blades (20) in the event of the turbine wheel spinning at too great a speed.

2. A turbine wheel according to claim 1, **characterized in that** the attachment members (20c, 22c) are Christmas-tree shaped.

3. A turbine wheel according to claim 1 or claim 2, **characterized in that** the attachment members (20c) of the first blades (20) are identical to the attachment members (22c) of the second blades (22).

4. A turbine wheel according to any one of claims 1 to 3, **characterized in that** the first and second blades (20, 22) are arranged in alternation around the periphery (14) of the disk (12).

5. A turbomachine (100) including at least one turbine wheel (10) according to any one of claims 1 to 4.
